# EUROPÄISCHE PATENTSCHRIFT

(11) **EP 0 522 332 B1**
(45) Veröffentlichungstag und Bekanntmachung des Hinweises auf die Patenterteilung: **28.10.1998**
(21) Anmeldenummer: 92110352.9
(22) Anmeldetag: 19.06.1992
(51) Int. Cl.: G06F 1/00, B41F 33/00

(54) **Rechner für den Leitstand einer Maschine, insbesondere eine Druckmaschine**
Computer for controlling a machine, especially a printing press
Calculateur pour le contrôle d'une machine, notamment d'une presse d'impression

(30) Priorität: 12.07.1991 DE 4123126
(43) Veröffentlichungstag der Anmeldung: 13.01.1993
(73) Patentinhaber: M.A.N.-ROLAND Druckmaschinen Aktiengesellschaft, 63012 Offenbach (DE)
(72) Erfinder: Ruppertz, Michael, W-6232 Bad-Soden/Taunus (DE); Schebesta, Dietrich, W-6050 Offenach/Main (DE); Schönfeld, Frank, W 6052 Mühlheim 3 (DE)
(74) Vertreter: Marek, Joachim, Dipl.-Ing.

(56) Entgegenhaltungen:
- EP-A- 0 135 888
- EP-A- 0 243 697
- EP-A- 0 395 890
- EP-A- 0 410 253
- EP-A- 0 449 242
- DE-A- 3 621 543
- DE-A- 3 828 573
- US-A- 4 727 544
- US-A- 4 937 864

## Beschreibung

Die Erfindung betrifft einen Rechner für den Leitstand einer Maschine, insbesondere für eine Druckmaschine gemäß dem Oberbegriff von Anspruch 1.

Der Druckprozeß wird heute zunehmend von einem Leitstand aus gesteuert und überwacht. Von diesem Leitstand aus können somit die verschiedensten Komponenten sowie Stellglieder in ihrem Ist-Zustand überwacht und entsprechend den Prozeßbedürfnissen auch verstellt werden. In dem Leitstand einer Druckmaschine sollen aber nicht nur Steuer- und Prozeßdaten eben dieser einen Druckmaschine bearbeitbar sein, sondern gemäß dem CIM-Konzept der Druckindustrie soll der Leitstand ein Teil in einem Netzwerk des gesamten Produktionsprozesses von Druckvorstufe bis Endverarbeitung des Druckproduktes sein. Genauer beschrieben ist dies in den Literaturstellen aus "Deutscher Drucker" und zwar in "Neue Leitstandtechnik im Zeitungsdruck", Seite w140, Nr. 30, 24.9.87 bzw. in "Die intelligente Druckmaschine - demonstriert am Beispiel einer Leitstandtechnik für die Zukunft", Seite w2, Nr. 11, 21.3.91. Das Druckereisteuerungssystem gemäß der DE 3 829 341 A1 beschreibt ebenfalls die Leitstandtechnik sowie die Informationsvernetzung innerhalb einer Druckerei.

Aus der Literaturstelle "Neue Leitstandtechnik im Zeitungsdruck", aaO, sowie der DE 3 924 989 A1 ist bekannt, daß ein Leitstand für eine Druckmaschine für den Bediener eine Dateneingabevorrichtung (Tastatur) sowie eine Datenanzeigeeinrichtung (Bildschirm) aufweist. Diese Komponenten sind dann meist noch in einem Farbabstimmpult, welches der Druckmaschine zugeordnet ist, integriert. Hauptbestandteil des Leitstandes ist ein Rechner nach Art eines Personal-Computer (PC), insbesondere in der Ausführung eines sogenannten Industrie-PC's. Dieser Leitstand-PC ist dann über verschiedene Schnittstellen und Bus-Systeme sowohl mit den einzelnen Komponenten der Druckmaschine als auch mit anderen Rechnern nach Art eines Netzwerkes verbunden. Die Bedienperson der Druckmaschine kann über den Bildschirm des Leitstands den Prozeß überwachen und über die Tastatur das Ansteuern der verschiedensten Stellmittel bewirken. Das ganze Überwachen und Steuern des Druckprozesses vom Leitstand aus geschieht dabei in vorteilhafter Weise durch Einbindung in eine sogenannte menügeführte Benutzeroberfläche. Die Programmteile für das Steuern bzw. Anzeigen sowie für die Menüführung sind dabei auf der Festplatte des PC's gespeichert und werden bei Bedarf von der Festplatte in das RAM des PC's geladen. Diese Programmteile laufen dabei vorteilhafter Weise unter dem weit verbreiteten und bekannten Betriebssystem "PC-DOS" (IBM), welches desweiteren kurz als DOS bezeichnet wird. Dieses Disk-Operating-System (DOS) übernimmt dabei die Aufgabe der Datenverteilung, also des Datenverkehrs zwischen den einzelnen Eingabe- und Ausgabeeinheiten. Der PC des Leitstands weist neben dem als Festplattenlaufwerk ausgebildeten Massenspeicher zusätzlich noch ein Laufwerk für wechselbare Massenspeicher, insbesondere in Form von Disketten auf. Dieses Diskettenlaufwerk ist nötig, um bei eventuellen Servicearbeiten bzw. bei der Installation des Leitstandes entsprechende Programmteile auf der Festplatte austauschen zu können bzw. dort vorhandene Programmteile durch aktuellere, d.h. weiterentwickeltere Programmteile zu ersetzen. Selbstverständlich dürfen derartige Manipulationen nur von hochqualifiziertem Service- bzw. Entwicklungspersonal durchgeführt werden.

Daß der PC des Leitstandes einer Druckmaschine in Aufbau und Art der Datenverarbeitung den PC's im Büro und Entwicklungsbereich entspricht, hat den Vorteil, daß die entsprechenden Programme für die Benutzerführung auf ganz normalen PC's entwickelt werden können. Auch können diese Programmteile auf ganz normalen Datenträgern (Disketten) abgespeichert und dann im PC des Leitstandes aufgerufen bzw. auf dessen Festplatte kopiert werden. Dies erleichtert den Service bzw. Installationsaufwand. Ein weiterer Vorteil einer derartigen Ausgestaltung des Rechners eines Leitstandes ist die Tatsache, daß auf handelsübliche Industrie-PC's zurückgegriffen werden kann, also auf PC's, deren Hardware an die rauhe Industrieumgebung angepaßt ist. Teure und aufwendige Rechnerentwicklungen können somit unterbleiben.

Enthält ein Leitstand einer Druckmaschine einen üblichen Industrie-PC, so bedingt das aber auch einen entscheidenden Nachteil. Es ist nämlich nicht auszuschließen, daß eine Bedienperson des Leitstandes über die Tastatur unautorisierte Eingriffe in das Betriebssystem des Leitstand-PC's durchführt, also beispielsweise Programmteile der menügeführten Benutzeroberfläche löscht und/oder verfälscht. Allgemein bekannt ist die Tastenkombination, welche auf einer normalen PC-Tastatur zu betätigen ist, um beispielsweise aus dem Programm der menügeführten Benutzeroberfläche auf die sogenannte DOS-Ebene, also auf die Programmebene des Betriebssystems zu gelangen. Durch Verwendung einer speziellen Tastatur am Leitstand, nämlich einer Tastatur die diese Tastenkombination nicht möglich macht, kann dieses Problem vermieden werden. Wegen den rauhen Betriebsbedingungen die an einem Produktionsort herrschen, werden bei Leitständen ohnehin fast ausschließlich spezielle Tastaturen, welche insbesondere noch der Menüführung angepaßt sind, verwendet. Wesentlich nachteilger ist jedoch, daß der PC des Leitstandes ein Diskettenlaufwerk aufweist, mittels dem ein nicht autorisierter Benutzer über eine dort eingelegte Diskette den PC starten (Booten) kann. Dies ergibt sich aus der Tatsache, daß bei einem normalen PC durch eine im ROM abgelegte Startroutine, das sogenannte BIOS (Basic Input/Output-System) bei jeder Inbetriebnahme des PC's zuerst ein Zugriff auf das Diskettenlaufwerk erfolgt, dann geprüft wird, ob dort eine Diskette eingelegt ist, welche einen sogenannten bootfähigen Sektor aufweist und, wenn dies der Fall ist, das Booten des PC's eben von der Diskette erfolgt. Befindet sich im Diskettenlaufwerk keine Diskette oder eine ohne entsprechenden Sektor, so erfolgt das Booten des PC's über ein entsprechendes Programmteil auf dem Festplattenlaufwerk, woraufhin sich beispielsweise das DOS-Betriebssystem des PC's mit den entsprechenden Programmteilen in Gang setzt und dann das Laden des eigentlichen Benutzerprogrammes erfolgt. Wie jedoch bereits obenstehend erläutert, können in einfacher Weise unautorisierte Zugriffe dadurch vorgenommen werden, indem bei Inbetriebnahme des PC's eine Diskette eingelegt wird, von welcher aus der PC gebootet werden kann. Also insbesondere eine Diskette mit den entsprechenden DOS-Programmteilen.

Aus der US-PS 4,937,864 ist ein Debug-System für den Rechner einer Maschine und insbesondere einer Reproduktions-(Druck)Maschine bekannt. Der Rechner weist ein Diskettenlaufwerk sowie ein Festplattenlaufwerk auf, wobei in das Diskettenlaufwerk Disketten einlegbar sind, welche Schlüsselzahlen enthalten, die entsprechend numerierte Teile des Betriebssystems, nämlich Debug-Routinen oder Service-programme, ausführbar machen.

Aus der EP 0 135 888 A2 ist ein Verfahren zur Verhinderung des Ablaufes eines Programms auf für dieses Programms nicht zugelassenen Rechnern bekannt. In Verbindung mit Schlüsselworten und der Bildung von Prüfsummen wird verhindert, daß nicht rechtmäßig erworbene Programme zur Ausführung bringbar sind.

Aufgabe der vorliegenden Erfindung ist es somit, einen Rechner für den Leitstand einer Maschine, insbesondere einer Druckmaschine derartig auszugestalten, so daß unautorisierte Zugriffe auf das Betriebssystem und die entsprechenden Programmteile, welche auf der Festplatte gespeichert sind, über die Tastatur in Verbindung mit dem Diskettenlaufwerk verhindert werden können. Die Betriebssicherheit des Gesamtsystems soll erhöht werden, ohne daß sich zwangsläufig eine Einschränkung bei Service- oder Installationsarbeiten ergeben.

Gelöst wird diese Aufgabe durch die kennzeichnenden Merkmale von Anspruch 1. Weiterbildungen der Erfindung ergeben sich aus den Unteransprüchen in Verbindung mit der Beschreibung.

Die Vorteile der Erfindung liegen in der Einfachheit, gerade im Hardware-Bereich, mit dem unautorisierte Zugriffe auf das Betriebssystem eines Leitstand-PC's verhindert werden können. Zum einen ist nur eine geringe Abänderung des im ROM des PC's abgelegten BIOS nötig, um dies zu bewerkstelligen. Das nach der Erfindung vorgesehene, abgeänderte BIOS kann beispielsweise in einem EPROM eingespeichert sein, wobei dieser Speicherbaustein dann an Stelle des für das Standard-BIOS vorgesehenen Speichers tritt. Zum anderen ist vorgesehen, daß Disketten mit einer codierten Information zum Einsatz kommen.

Eine autorisierte Bedienperson, welche bei Inbetriebnahme des Leitstand-PC's eine derartige Diskette einlegt, hat somit ungehindert Zugang zu dem Betriebssystem des PC's, kann also etwa anfällige Wartungs- oder Installationsarbeiten durchführen. Die formatierten Disketten sind weiterhin aber auch als auswechselbare Speichermedien zu benutzen. Es können also wie üblich Programmteile von bzw. auf diese Disketten kopiert werden. Erfolgt das Inbetriebnehmen des Leitstand-PC's ohne daß eine entsprechend der Erfindung vorgesehene Diskette eingelegt ist, so erfolgt das Booten des PC's ausschließlich von der extra dafür vorgesehenen Programm-Datei, welche auf der Festplatte abgelegt ist, so daß dann einem Benutzer ausschließlich die Bedienmöglichkeiten gegeben sind, wie sie beispielsweise durch die menügeführte Benutzeroberfläche vorgesehen sind. Auch das Einlegen einer Diskette mit einem bootfähigen Sektor von dem aus ein "normaler" PC zu booten wäre, führt wegen der nicht vorhandenen codierten Information nicht zum Erfolg. Eben auch dann erfolgt das Booten des PC's ausschließlich von der Festplatte.

Nach der Erfindung kann weiterhin vorgesehen sein, daß entsprechend dem Qualifikationsgrad der Bedienperson durch verschiedene Disketten nebst unterschiedlich codierter Information ein unterschiedliches Maß an Zugang auf das Betriebssystem ermöglicht wird. Das größte Maß an Zugangsberechtigung wird beispielsweise einem Entwicklungsingenieur zugesprochen. Eine solche Fachkraft kommt meist dann zum Einsatz, wenn schwerwiegende Störungen im System des Leitstandes vorliegen. Dieser verwendet somit eine Diskette, welche sämtliche Programmteile aufweist, um über die Tastatur des Leitstandes Programmteile des Betriebssystems und der menügeführten Benutzeroberfläche handzuhaben, zu kopieren bzw. durch andere zu ersetzen.

Bei regelmäßigen Service- bzw. Installationsaufgaben ist ein Einsatz eines hochqualifizierten Entwicklungsingenieurs nicht notwendig, solche Aufgaben werden im allgemeinen von Fachmännern des Services durchgeführt. Deren Qualifikation, d.h. deren Kenntnis vom Betriebssystem und den Programmteilen der menügeführten Benutzeroberfläche braucht dabei nicht so groß zu sein. Eine solche Fachkraft verwendet dementsprechend eine Diskette, die über eine entsprechend codierte Information lediglich einen eingeschränkten Zugriff über die Tastatur des Leitstandes auf das Betriebssystem des Leitstand-PC's ermöglicht, beispielsweise um spezielle Testroutinen abzufragen. Die geringste Zugangsberechtigung kann beispielsweise für den eigentlichen Benutzer des Leitstandes vorgesehen sein, d.h. für den Drucker. Dieser verwendet dementsprechend Disketten, die keine codierte Information besitzen, also keinen Zugang auf das Betriebssystem des Leitstand-PC's nebst den Programmteilen der menügeführten Benutzeroberfläche ermöglichen. Diese Diskette kann dann lediglich von bestimmten Programmpunkten der menügeführten Benutzeroberfläche beschrieben bzw. es können von dieser Diskette Daten gelesen werden.

Das zuvor beschriebene unterschiedliche Maß an Zugang zu dem Betriebssystem des Leitstand-PC's in Abhängigkeit von der Qualifikation der Bedienperson entspricht somit einem mehrstufigen Schlüssel. Der Schlüssel ist dabei gebildet aus äußerlich gleich aussehenden Disketten sowie einer durch das BIOS durchgeführten Abfrage einer codierten Information auf dieser Diskette, beispielsweise einer Check-Summenbildung beim Zugriff auf die Diskette im Laufwerk. Je nachdem welche Check-Summe beim Zugriff auf die Diskette ermittelt wird, dementsprechend weit werden die Möglichkeiten des Zugangs zu dem Betriebssystem und den Programmteilen der menügeführten Benutzeroberfläche durch das BIOS freigegeben. Nach der Erfindung kann ebenfalls vorgesehen sein, die Überprüfung der Zugangsberechtigung bei jedem Zugriff auf das Diskettenlaufwerk jedesmal neu durchführen zu lassen.

## Patentansprüche

1. Rechner für den Leitstand einer Druckmaschine, mit einem Laufwerk für Disketten und einem Festplattenlaufwerk, wobei auf dem Festplattenlaufwerk Programmteile des Betriebssystems und einer menügeführten Benutzeroberfläche abgespeichert sind, wobei durch einen Zugriff auf das Diskettenlaufwerk das Vorhandensein einer auf der Diskette gespeicherten Information feststellbar ist und in Abhängigkeit des Vorhandenseins dieser Information Programmteile des Betriebssystems freigebbar sind,
**dadurch gekennzeichnet,** daß die Zugriffe auf das Disketten- und Festplattenlaufwerk durch im ROM des Rechners abgelegte Programmteile (BIOS) durchgeführt werden und
daß im ROM ein Programmteil (BIOS) abgelegt ist, durch welches beim Starten des Rechners durch einen Zugriff auf das Diskettenlaufwerk das Vorhandensein einer auf der Diskette gespeicherten codierten Information festgestellt wird, daß beim Fehlen dieser codierten Information ausschließlich von einer vorgesehenen Programm datei auf der Festplatte gebootet wird und dadurch ausschließlich die Programmteile der menügeführten Benutzeroberfläche anwendbar sind und bei Vorhandensein dieser codierten Information der Rechner derart gebootet wird daß über die Tastatur des Rechners auf die auf der Festplatte gespeicherten Programmteile des Betriebssystems und der menügeführten Benutzeroberfläche eingewirkt werden kann.

2. Rechner nach Anspruch 1,
**dadurch gekennzeichnet,**
daß die auf der Diskette vorhandene codierte Information durch Check-Summenbildung festgestellt wird.

3. Rechner nach Anspruch 1 oder 2,
**dadurch gekennzeichnet,**
daß Disketten mit verschiedenen codierten Informationen vorgesehen sind, so daß bei Zugriff auf diese Disketten und dem Vorhandensein einer jeweiligen codierten Information der Zugriff über die Tastatur des Rechners auf die Programmteile des Betriebssystems und der menügeführten Benutzeroberfläche in unterschiedlicher Weise und in Abhängigkeit der auf der Diskette vorhandenen Information freigegeben wird.

## Claims

1. Computer for the control desk of a printing press with a drive for diskettes and a hard disk drive, wherein, on the hard disk drive, programme parts of the operating system and a menu-driven user interface are stored, whereby by interrogation of the diskette drive, the presence of information stored on the diskette can be detected and in dependence on the presence of this information, programme parts of the operating system can be released, characterised in that the interrogation of the diskette and hard disk drives are carried out via programme parts (BIOS) deposited in the ROM of the computer, that in the ROM a programme part (BIOS) is deposited by means of which, on starting the computer by accessing the diskette drive, the presence of coded information stored on the disk is detected, that, on the lack of this coded information, the computer is booted exclusively from a programme file provided on the hard disk and thereby exclusively the programme portions of the menu-driven user interface can be used and, on the presence of this coded information, the computer is booted in such a fashion that, via the keyboard of the computer, one can work on the programme parts of the operating system stored on the hard disk and on the menu-driven user interface.

2. Computer according to Claim 1, characterised in that the coded information present on the diskette is determined by checksum formation.

3. Computer according to Claim 1 or 2, characterised in that diskettes with variously coded information are provided so that on interrogation of these diskettes and the presence of a respective coded information, the access via the keyboard of the computer to the programme parts of the operating system and the menu-driven user interface are freed in different fashion and in dependence on the information present on the diskette.

## Revendications

1. Calculateur pour le poste de commande d'une machine d'impression, comportant un lecteur pour des disquettes et un lecteur de disque dur, des parties de programme du système d'exploitation et une interface utilisateur/système commandée par menu étant mémorisées dans le lecteur de disque dur, en pouvant déterminer par un accès au lecteur de disquettes la présence d'une information mémorisée sur la disquette et en pouvant libérer, de façon dépendant de la présence de cette information, des parties de programme du système d'exploitation,
caractérisé en ce que les accès au lecteur de disquettes et au lecteur de disque dur sont effectués par des parties de programme (BIOS) mémorisées dans la mémoire morte du calculateur, et en ce que, dans la mémoire morte, il est mémorisé une partie de programme (BIOS) grâce auquel, lors du démarrage du calculateur, par un accès au lecteur de disquettes, il est déterminé la présence d'une information codée mémorisée sur la disquette, en ce que, lorsque cette information codée manque, le démarrage est effectué exclusivement par un fichier de données de programme prévu sur le disque dur et, ainsi, exclusivement les parties de programme de l'interface utilisateur/système commandée par menu sont utilisables et, lorsque cette information codée est présente, le calculateur est démarré de sorte que, par l'intermédiaire du clavier du calculateur, on peut agir sur les parties de programme, mémorisées sur le disque dur, du système d'exploitation et de l'interface utilisateur/système commandée par menu.

2. Calculateur selon la revendication 1,
caractérisé en ce que l'information codée présente sur la disquette est déterminée par formation d'une somme de contrôle.

3. Calculateur selon la revendication 1 ou 2,
caractérisé en ce que des disquettes ayant différentes informations codées sont prévues, de sorte que, lors de l'accès à ces disquettes et lors de la présence d'une information codée respective, l'accès, par l'intermédiaire du clavier du calculateur, aux parties de programme du système d'exploitation et de l'interface utilisateur/système commandée par menu est libéré de façon différente et de façon dépendant de l'information présente sur la disquette.
